# EUROPÄISCHE PATENTSCHRIFT

(11) **EP 0 987 564 B1**
(45) Veröffentlichungstag und Bekanntmachung des Hinweises auf die Patenterteilung: **27.06.2007**
(21) Anmeldenummer: 99117164.6
(22) Anmeldetag: 01.09.1999
(51) Int. Cl.: G01S 17/08, G01S 7/481, G01S 7/499

(54) **Vorrichtung zur optischen Distanzmessung**
Device for measuring distance
Dispositif permettant de mesurer des distances

(30) Priorität: 02.09.1998 DE 19840049
(43) Veröffentlichungstag der Anmeldung: 22.03.2000
(73) Patentinhaber: Leica Geosystems AG, 9435 Heerbrugg (CH)
(72) Erfinder: Hinderling, Jürg, Dr., 9437 Marbach (CH); Benz, Paul, 9444 Diepoldsau (CH)
(74) Vertreter: Kaminski, Susanne

(56) Entgegenhaltungen:
- EP-A- 0 313 518
- WO-A-99/12052
- DE-A- 4 316 348
- DE-C- 4 002 356
- HUEP W ET AL: "THEODOLITSYSTEME FUR INDUSTRIELLE UND GEODATISCHE MESSUNGEN" TECHNISCHE RUNDSCHAU,CH,HALLWAG VERLAG. BERN, Bd. 80, Nr. 39, Seite 14-18 XP000022162 ISSN: 1023-0823
- K. Grimm, P. Frank, K.Giger: "Distanzmessung nach dem Laufzeitverfahren mit geodätischer Genauigkeit", Wild Heerbrugg AG, CH-9435 Heerbrugg; Firmendruckschrift "DISTOMAT Wild DI3000" (Distanzmessung mit DISTOMAT WILD DIOR 3002);Veröffentlichungsvermerk: V.86 Gedruckt in der Schweiz, 16 Seiten XP002125661

## Beschreibung

Die Erfindung betrifft eine Vorrichtung zur optischen Distanzmessung in der geodätischen und industriellen Vermessung entsprechend den Merkmalen im Oberbegriff des Anspruchs 1 bzw. 2.

Optische Distanzmesser finden vielfältige Einsatzmöglichkeiten in der geodätischen und industriellen Vermessung. Sie tragen dazu bei, zusammen mit einer Winkelmessung die dreidimensionalen Koordinaten von Zielpunkten oder Zielobjekten im Raum zu bestimmen. Die zu vermessenden Zielpunkte werden mit reflexionsunterstützenden Hilfsmitteln markiert. Andere Zielpunkte oder Zielobjekte werden als solche direkt angezielt. Deshalb wird aus meßtechnischer Sicht zwischen kooperativen und nicht-kooperativen Zielobjekten unterschieden. Kooperative Zielobjekte sind selbstleuchtende oder reflektierende Zielmarken wie Kugelreflektoren, Reflexfolien oder Tripelprismen. Nicht-kooperative Zielobjekte sind natürliche, rauhe Oberflächen wie zum Beispiel die von Bauwerken oder Gesteinen.

Die Zielobjekte werden mit einem Theodoliten, der einen auf dem Theodolitfernrohr aufgesetzten Entfernungsmesser enthält, oder mit einem Tachymeter, also einem Theodoliten mit einem integrierten Entfernungsmesser, anvisiert. Die Distanzmessung erfolgt nach dem Phasen- oder Laufzeitmeßprinzip mit intensitätsmodulierter oder gepulster Strahlung. Durch die Winkel- und Entfernungsmessung sind die dreidimensionalen Koordinaten der Zielobjekte bezüglich eines vorgegebenen Koordinatensystems bestimmt. Damit können einzelne Zielpunkte in der Geodäsie, in der Bau- oder Industrievermessung in ihren Koordinaten ermittelt werden. Oder es können mit kooperativen Zielmarken versehene Oberflächen z. B. von Flugzeugen vermessen werden (W. Huep, O. Katowski: Theodolitsysteme für industrielle und geodätische Messungen. In: Technische Rundschau Nr. 39, 1988, Seite 14-18).

Andererseits ist es auch möglich, die auf einer Landkarte oder auf einem Bauplan vorgegebenen Koordinaten mit einem Tachymeter und einem mit Reflektoren bestückten Lotstock vor Ort abzustecken. Dies ist im Bauwesen oder bei der Trassenführung im Straßenbau üblich. Auch zur Steuerung von Vortriebsmaschinen im Straßen-, Tunnel- und Bergbau werden Tachymeter eingesetzt.

Herkömmliche, auf Zielmarken messende elektronische Theodolite nutzen einen integrierten oder auf dem Theodolitfernrohr aufgesetzten Entfernungsmesser. Fast alle integrierten oder aufgesetzten Entfernungsmesser besitzen eine biaxiale Optik für Sende- und Empfangsstrahlen. Es ist auch ein Entfernungsmesser in koaxialer Optikausführung mit einem He-Ne-Laser als Lichtquelle aus der EP 0 313 518 B1 bekannt, der auf Reflexfolien und auf natürliche Objekte messen kann. Allerdings ist dies ein aufgesetzter Entfernungsmesser, der als solcher eine Parallaxe zur Theodolit-Zielachse aufweist und bei dem der Ort des Meßflecks und der Ort der Anzielung durch den Theodoliten nicht identisch sind.

Die biaxialen integrierten oder aufgesetzten Entfernungsmesser besitzen einen getrennten, im allgemeinen seitlich versetzten Sende- und Empfangsstrahlengang. Damit wird dem seitlichen Versatz des Lichtbündels bei der Reflexion an retroreflektierenden Zielmarken (z.B. Tripelprismen) Rechnung getragen, die einen einfallenden Lichtstrahl parallel und seitenversetzt reflektieren. Beim integrierten Entfernungsmesser wird die eine Hälfte des Theodolit-Fernrohrobjektives für den Sendestrahl und die andere Hälfte des Fernrohrobjektives für den Empfang des reflektierten Strahls genutzt. Hingegen besitzt ein Aufsatz-Entfernungsmesser sowohl eine vollkommen getrennte optische Achse für die Sende- und Empfangsoptik als auch eine Parallaxe zur Zielachse des Theodolitfernrohres. Dies bedeutet, daß der Anzielpunkt, auf den die Zielachse des Theodolitfernrohres gerichtet ist, und der Ort des Meßfleckes des Aufsatz-Entfernungsmessers auf dem Zielobjekt nicht identisch sind. Dies ist für Punktmessungen nachteilig. Unter anderem deshalb werden Aufsatz-Entfernungsmesser nach und nach durch integrierte Entfernungsmesser ersetzt.

Aus der Firmendruckschrift DISTOMAT Wild D13000 (K. Grimm, P. Frank, K.Giger: "Distanzmessung nach dem Laufzeitverfahren mit geodätischer Genauigkeit" (Distanzmessung mit Distomat Wild DIOR 3002), Wild Heerbrugg AG, CH 9435 Heerbrugg Veröffentlichungsvermerk: V.86 Gedruckt in der Schweiz, 16 Seiten) sind weiters biaxiale Distanzmesser bekannt, die die Distanz sowohl zu Reflektorzielen als auch zu nicht-kooperativen Zielobjekten mit natürlicher, rauher Oberfläche basierend auf dem Laufzeitmessprinzip mit geodätischer Genauigkeit messen können. Beispielsweise werden solche Vorrichtungen zur Vermessung von schwer zugänglichen Oberflächen wie im Anlagenbau (Kühltürme von Kernkraftwerken), bei Brücken, Staumauern, in Steinbrüchen oder im Schiffsbau eingesetzt. Weitere Anwendungen liegen in der Profilmessung von Tunneln, Schächten und Straßen und in der Vermessung von Gebäudefassaden. Die Reichweite beträgt bei der Messung auf solche nicht-kooperativen Ziele wenige hundert Meter. Durch die Biaxialität dieser Distanzmesser wird eine Parallaxe hervorgerufen, die einen Versatz der Schwerpunktlage des Bildpunktes bewirkt. Dieser Effekt ist insbesondere im Nahbereich so ausgeprägt, daß eine Messung ohne zusätzliche technische Maßnahmen nicht möglich ist. Deshalb werden bei der Messung kurzer Entfernungen beispielsweise Vorsatzlinsen auf die Sende- und Empfangsoptik aufgesteckt, wie dies bei dem in diesem Dokument genannten Entfernungsmesser WILD DIOR 3002 der Fall ist. Dies bedeutet einen gewissen Handlungsaufwand. Bei einer anderen technischen Lösung wird die Parallaxe durch Drehen eines kugelgelagerten Rhombusprismas in Abhängigkeit der Verschiebung der Fokuslinse des Theodolitfernrohres kompensiert (biaxialer Tachymeter Rec Elta RL der Firma Zeiss mit zwei Objektiven für die Sende- und Empfangsoptik). Eine derartige Kompensation der Parallaxe bedeutet mit den präzise bewegten optischen und mechanischen Bauteilen einen hohen technischen Aufwand und führt zudem zu einem großen und schweren Vermessungsinstrument.

Der in der WO 99/12052 A1 offenbarte, ebenfalls auf dem Laufzeitmessprinzip basierende Distanzmesser benötigt durch die Anordnung des Sendestrahlenbündels koaxial zum Empfangstrahlenbündel weder eine Vorsatzoptik - noch die voranstehend genannte Einrichtung zur Kompensation der Parallaxe - bei der Messung kurzer Entfernungen. Die durch diese koaxiale Anordnung hervorgerufenen, internen Strahlungsreflexe, welche die Laufzeitmessung bei Nahbereichsmessungen stören, werden durch eine jeweilige kurzzeitige Deaktivierung des Empfängers unmittelbar nach dem Senden des Meßpulses unterdrückt.

Die bisher genannten biaxialen Distanzmesser arbeiten mit Strahlungsquellen, die infrarotes Licht mit großen Öffnungswinkeln aussenden. Die Lichtbündeldurchmesser betragen bei 100 Meter bereits 15-20 cm. Bei Entfernungsmessungen zu Reflektoren sind zwar einerseits große Lichtbündeldurchmesser für das Auffinden der Reflektoren vorteilhaft.

Andererseits führt ein großer Lichtbündeldurchmesser für das Messen auf nicht-kooperative Ziele zu einer stark verringerten örtlichen Auflösung, da über die bestrahlte Fläche ein entsprechend den lokalen Reflexionseigenschaften intensitätsgewichteter Distanzwert erfaßt wird. Dadurch ergibt sich bei geneigten oder strukturierten Objektoberflächen nicht die wahre Distanz zum Zielpunkt des Entfernungsmessers. So sind z. B. auf der Objektoberfläche befindliche Erhebungen mit kleinem Durchmesser, Rohre und Leitungen an Fassaden oder in Innenräumen von Gebäuden oder die Strukturen von Fensterlaibungen wegen der großen Querschnittsfläche des Lichtbündels nicht meßbar. Selbst bei kurzen Distanzen von einigen Metern beträgt der Lichtbündeldurchmesser bereits mehrere Zentimeter. Deswegen werden auch Absätze in Oberflächen leicht vom großen Meßfleck überdeckt, wodurch ein fehlerhafter Entfernungsmeßwert entsteht.

Bei geneigten Oberflächen, auf die das Meßlichtbündel nicht senkrecht fällt, können Inhomogenitäten der Objektoberfläche innerhalb des Meßflecks lokal unterschiedliche Reflexionsgrade bedingen. Solche Inhomogenitäten entstehen z. B. durch Verschmutzung, durch unterschiedliche Anstriche, Feuchtigkeit oder Rauhigkeit von Oberflächen. Durch die örtlich unterschiedlichen Reflexionen innerhalb des Meßflecks kommt es zu einer ungleichen Gewichtung bei der Distanzmessung, so daß nicht die eigentliche Entfernung zum Durchstoßpunkt der Zielachse mit der zu vermessenden Oberfläche gemessen wird.

Schließlich ist wegen der Verwendung von infraroter Meßstrahlung die tatsächlich angemessene Objektstelle auf einer Oberfläche nicht erkennbar. Die Objektstelle wird nur indirekt entweder über die Fernrohroptik des Tachymeters oder durch die Verwendung der sichtbaren Strahlung eines zur Zielachse des Entfernungsmessers ausgerichteten Laserpointers anvisiert.

Weiterhin sind handgehaltene Distanzmeßgeräte bekannt, die mit einer sichtbaren Meßstrahlung für nicht-kooperative Ziele bei kurzen Entfernungen arbeiten. Aus der DE 40 02 356 C1 wird ein Abstandsmeßgerät mit getrenntem Sende- und Empfangsstrahlengang für den Abstandsbereich von 2-10m beschrieben. Es enthält zwei elektronisch komplementär schaltbare Laserdioden, von denen die eine ihre Lichtwellenzüge auf die Meßstrecke zum Ziel und die andere ihre Lichtwellenzüge auf eine geräteinterne Referenzstrecke zu Kalibrierzwecken schickt. Beide Lichtwellenzüge werden von demselben Fotoempfänger abwechselnd empfangen. In der Zeitschrift "Industrie", 11/92, Seite 6-8, wird ein Entfernungsmeßgerät DME 2000 der Firma Sick GmbH beschrieben, das mit zwei Halbleiter-Laserdioden arbeitet. Das erforderliche Sendelicht erzeugt eine Laserdiode mit Kollimatoroptik, die zweite Laserdiode liefert das notwendige Referenzsignal direkt an den Empfänger. Das Sende- und Empfangsstrahlenbündel sind zueinander koaxial. Der Meßabstand zu natürlichen Oberflächen ist auf 4 Meter begrenzt. In der DE 43 16 348 A1 ist eine Vorrichtung zur Distanzmessung offenbart, die einen separaten Sende- und Empfangsstrahlengang besitzt und mit der auf natürlich rauhen Oberflächen bis zu 30 Meter Entfernung mit sichtbarer Strahlung gemessen werden kann.

Es ist die Aufgabe der Erfindung, eine Vorrichtung zur Distanzmessung für geodätische, baugewerbliche oder industrielle Vermessungszwecke anzugeben, mit der sowohl auf kooperative als auch auf nicht-kooperative Zielobjekte gemessen werden kann, die eine hohe örtliche Auflösung auch bei nicht-kooperativen Zielobjekten besitzt, so daß die Distanz zu kleinen Strukturen auf natürlich reflektierenden Oberflächen gemessen werden kann, mit der große und kleine Entfernungen mit geodätischer Genauigkeit gemessen werden können und mit der alle Arten von Zielobjekten in jedem Entfernungsbereich leicht und ohne Aufwand visuell angezielt werden können.

Diese Aufgabe wird erfindungsgemäß durch die im Kennzeichen der Ansprüche 1 und 2 angegebenen Merkmale gelöst. Vorteilhafte Ausgestaltungen und Weiterbildungen der Erfindung ergeben sich aus den Unteransprüchen.

Im erfindungsgemäßen Distanzmesser sind in der Sendereinheit eine oder zwei optische Strahlungsquellen integriert, die zwei Strahlungsbündel erzeugen. Die Strahlungsbündel unterscheiden sich in ihrer Strahldivergenz, wobei die Strahlung des einen Strahlungsbündels im sichtbaren Wellenlängenbereich liegt und beugungsbegrenzt ist. Das andere Strahlungsbündel verläuft divergent. Es wird ein gemeinsames Objektiv sowohl für die auf das Zielobjekt gerichtete Strahlung als auch für den Empfang der vom Zielobjekt reflektierten oder gestreuten Strahlung genutzt. Zudem werden Selektionsmittel zur Unterscheidung der beiden Strahlungsarten bzw. Strahlungsbündel eingesetzt. Insgesamt ergeben sich dadurch eine Reihe von Vorteilen bei der Vermessung in der Geodäsie, im Bauwesen und in der industriellen Vermessung. Die Vorteile sind die Anpassung an unterschiedliche Arten von Zielobjekten, die sehr hohe Meßgenauigkeit und Meßsicherheit für den gesamten abzudeckenden Entfernungsmeßbereich und leichte und schnelle Handhabungs- und Meßabläufe.

Die im Distanzmesser eingesetzten Strahlungsarten und die zugehörigen Divergenzen der Strahlungsbündel sind optimal für verschiedene Zielobjektarten und Entfernungen angepaßt. Bei Meßaufgaben, bei denen mm- oder sub-mm-Meßgenauigkeit gefordert ist, werden Zielpunkte mit Reflektoren oder Reflexfolien markiert. Hierfür ist die Strahlung mit großer Strahldivergenz geeignet, da im Falle der Anwendung einer Laufzeitmeßmethode Inhomogenitäten gleicher Laufzeit durch große Strahldivergenzen geglättet werden.

Ebenso werden große Entfernungen mit Hilfe von Reflektoren gemessen. Auch hier ist die große Strahldivergenz von Vorteil, da der Reflektor aufgrund des großen Strahlquerschnitts am Reflektorort leicht erfaßt wird. Vorzugsweise wird infrarote Strahlung benutzt, so daß Bedienpersonen (Lotstockträger) oder Passanten nicht geblendet werden. Dies gilt insbesondere auch bei Messungen auf bewegliche kooperative Ziele im nahen Distanzbereich, bei denen die Bestrahlungsstärke des Meßlichtbündels groß ist.

Die Grobanzielung des Zielobjektes erfolgt durch visuelle Abschätzung oder mit einfachen Hilfsmitteln wie Kimme und Korn oder einem am Distanzmesser angebrachten Diopter. Bei Einbau des Distanzmessers in einen Theodoliten kann natürlich das Theodolitfernrohr für die Anzielung bei sehr großen Distanzen genutzt werden.

Für die Messung auf Zielobjekte mit natürlich rauhen Oberflächen wird die beugungsbegrenzte sichtbare Strahlung verwendet. Ein beugungsbegrenztes Strahlungsbündel besitzt eine geringstmögliche Strahldivergenz und somit einen sehr geringen Strahlenbündeldurchmesser. Somit wird auf dem Zielobjekt ein Meßfleck mit einem nur geringen Durchmesser erzeugt. Deshalb können auch kleine Strukturen auf einer Oberfläche vermessen werden. Damit ist es überhaupt möglich, zum Beispiel dünne Rohre und elektrische Leitungen auf Fassadenoberflächen oder Innenräumen oder die räumliche Struktur von Oberflächen selbst zu vermessen. Zudem ist der Meßfleck der Meßstrahlung auf dem Zielobjekt sichtbar. Die Strukturen werden also mit der Meßstrahlung selbst angezielt und die Größe des Meßflecks ist erkennbar. Dadurch ist ein großer Handhabungs- und Schnelligkeitsvorteil gegeben. Zudem ist dadurch auch ein hohes Maß an Meßsicherheit gegeben. Es wird der wahre Entfernungswert ermittelt, denn Anziel- und Meßstrahl sind identisch. Ein separat angeordneter Laserpointer als Zielhilfe oder ein sonst notwendiger Blick durch eine Fernrohroptik zur Anzielung entfällt.

Weiterhin dürfen bei Einsatz eines Lasers als beugungsbegrenzte Strahlungsquelle im sichtbaren Wellenlängenbereich nach den Lasersicherheitsvorschriften höhere Sendeleistungen abgestrahlt werden. Dieser Umstand begünstigt die Reichweite auf nicht-kooperative Zielobjekte, die im Vergleich zu den kooperativen Zielobjekten einen um mehrere Größenordnungen kleineren Reflexionsgrad aufweisen.

Neben dem Einsatz der beugungsbegrenzten sichtbaren Strahlung für nicht-kooperative Zielobjekte im Bereich geringerer Distanzen kann sie wegen der höheren Strahlungsleistung im Einzelfall auch für kooperative Zielpunkte bei besonders großen Entfernungen von vielen km verwendet werden. Allerdings ist es mit dem geringen Bündeldurchmesser schwierig, das Reflektorziel zu treffen.

Für den Routinemeßbereich herauf zu einigen km auf Reflektorziele wird das divergente Strahlungsbündel genutzt. Diese kann darüber hinaus aber auch für nicht-kooperative Zielobjekte eingesetzt werden, bei denen es nicht auf eine Vermessung sehr kleiner Strukturen ankommt.

Zur Anpassung der Messung auf verschiedenartige Zielobjekte und Entfernungen sind für die unterschiedlichen Strahlungsarten bzw. Strahlungsbündel Selektionsmittel vorgesehen. Die Selektionsmittel können verschiedene optische Filter oder / und Umschaltvorrichtungen sein. Beispielsweise kann eine Umschaltung zwischen den Strahlungsbündeln durch den Benutzer per Knopfdruck erfolgen, so daß sich der Benutzer bewußt für ein bestimmtes Strahlungsbündel für sein Meßproblem entscheiden kann. Die Umschaltung kann aber auch automatisch durch den Distanzmesser selbst, zum Beispiel in Abhängigkeit von der Messung der empfangenen Lichtintensitäten oder der gemessenen Entfernung erfolgen. Natürlich kann auch unabhängig von Meßkriterien ständig zwischen den Strahlungsbündeln mit einer bestimmten Taktfrequenz hin- und hergeschaltet werden. Ebenso ist aber auch eine gleichzeitige und kontinuierliche Strahlungsemission der beiden Strahlungsbündel und entsprechende kontinuierliche Beleuchtung des Zielobjektes möglich, wobei erst im Empfangsstrahlengang eine Selektion nach den Strahlungsbündeln erfolgt.

Deshalb kann die Selektion der Strahlung auf verschiedene Weisen mit Hilfe von unterschiedlichen Selektionsmitteln realisiert werden. Bei der gleichzeitigen Emission der zwei Strahlungsbündel können Filter als Selektionsmittel vor dem Detektor in den Empfangsstrahlengang gebracht werden. Die Filter lassen nur die eine oder nur die andere Strahlung hindurch. Hierzu kann zum Beispiel ein manuell bedienbares oder motorisch angetriebenes Filterrad mit entsprechenden Filtern eingesetzt werden. Es wird das jeweilige Strahlungsbündel von einem einzigen Detektor empfangen. Oder der Empfangsstrahlengang kann mit Hilfe eines selektiven Strahlenteilers in zwei Strahlengänge für jeweils ein Strahlungsbündel aufgeteilt sein, so daß zwei Detektoren gleichzeitig die jeweils empfangene Strahlung messen können.

Andererseits kann die Selektion der Strahlungsbündel bereits in der Sendereinheit erfolgen. So können in die Strahlengänge direkt vor der einen oder vor beiden Strahlungsquellen elektrooptische Vorrichtungen, mechanische Vorrichtungen, Filter oder ein steuerbarer Frequenzverdoppler oder Q-Switcher eingebracht werden, die jeweils alternierend ein Strahlungsbündel blockieren oder unterdrücken und die andere als Meßstrahlung freigeben. Natürlich können auch die Strahlungsquellen selbst jeweils ein- und ausgeschaltet werden, so daß überhaupt nur ein Strahlungsbündel emittiert wird. In diesen Fällen sind dann Filter im Empfangsstrahlengang prinzipiell nicht notwendig. Um aber Fremdlicht zu eliminieren und ein hohes Signal/Rauschverhältnis zu erreichen, sind zusätzliche Filter natürlich sinnvoll.

Die Strahlungsbündel werden alternativ oder gleichzeitig durch das Objektiv in Richtung Zielobjekt hindurchgeführt. Für diese Durchführung sind grundsätzlich alle Bereiche des Objektivs geeignet. Es können daher auch mehrere unterschiedliche Bereiche der Objektivpupille für die Emissionsstrahlung genutzt werden. Die reflektierte Strahlung kann wiederum von einem anderen Objektivbereich empfangen werden.

Vorzugsweise werden beide Strahlungsbündel mit dem Bündelschwerpunkt im Zentrum des Objektives, also koaxial zur optischen Achse des Objektivs geführt. Dies hat den Vorteil, daß die Empfängerachse und gleichzeitig oft als Zielachse dienende optische Achse des Objektivs gemeinsam mit den beiden Senderachsen der emittierten Strahlungsbündel auf das Zielobjekt ausgerichtet ist. Das Zielobjekt wird somit genau an der selben Stelle anvisiert, zu der auch die Entfernung gemessen wird. Dadurch wird eine sehr genaue Entfernungsmessung erreicht. Die Koaxialität der Emissionsstrahlung bedeutet dabei nicht notwendigerweise, daß der Strahlenquerschnitt rotationssymmetrisch zur Achse des Objektivs sein muß. Ein bezüglich der optischen Achse asymmetrisch geformter Strahlenquerschnitt ist auch möglich. Der Flächenschwerpunkt des Strahlenquerschnitts sollte vorzugsweise mit der optischen Achse des Objektivs zusammenfallen

Dasselbe Objektiv ist zudem auch für den Empfang der reflektierten Strahlung konzipiert. Deshalb ist der Distanzmesser zugleich auch parallaxefrei und es müssen deswegen keine zusätzlichen Maßnahmen für einen sonst notwendigen Ausgleich der Parallaxe ergriffen werden. Natürlich müssen dabei das Objektiv und zugehörige weitere optische Elemente entsprechende Qualitäten hinsichtlich der Transmission der Strahlungen aufweisen.

Wird der Distanzmesser in einen Theodoliten eingebaut, können neben der Distanz auch die Winkelkoordinaten des Zielobjektes bestimmt werden. Der Theodolit mißt den horizontalen und vertikalen Winkel der zum Zielobjekt gerichteten optischen Achse des Theodolitfernrohres in einem vorgegebenen Koordinatensystem. Der Distanzmesser kann prinzipiell als separates Meßinstrument im Theodoliten eingebaut oder auf das Theodolitfernrohr aufgesetzt werden. Jedoch ergeben sich zusätzliche Vorteile, wenn Distanzmesser und Theodolit zu einem Gerät mit nur einem einzigen Objektiv verschmolzen werden. Das Objektiv dient dann sowohl dem Distanzmesser als auch dem Theodolitfernrohr. Hierdurch existiert nur eine einzige Zielachse. Auf diese Zielachse beziehen sich sowohl die Distanzmessung mit zu dieser Achse koaxialem Sende- und Empfangsstrahlengang als auch die Winkelmessung. Dadurch wird ein Höchstmaß an Genauigkeit bei der Bestimmung der dreidimensionalen Koordinaten des Zielobjektes erreicht. Es werden dabei verschiedene Arten von Zielobjekten in verschiedenen Distanzbereichen mit hoher Auflösung schnell und sicher in ihren dreidimensionalen Koordinaten vermessen.

Im folgenden werden Ausführungsbeispiele der Erfindung anhand der Zeichnung näher erläutert. Es zeigen in schematischer Darstellung:
- Fig.1: einen erfindungsgemäßen Distanzmesser mit zwei Strahlungsquellen,
- Fig.2: eine Variante gemäß Fig. 1 mit einer Emissionssteuerung der Strahlungsquellen,
- Fig.3: eine Variante gemäß Fig. 1 mit einer Transmissionssteuerung,
- Fig.4: einen Distanzmesser mit einer einzigen Strahlungsquelle und zwei verschiedenen Strahlungsbündeln
- Fig.5a: eine Variante gemäß Fig. 1 mit zwei Detektoren,
- Fig.5b: eine Variante gemäß Fig. 5a mit einem wellenlängenselektiven Strahlenteiler,
- Fig.6: einen Distanzmesser mit einer beliebigen Strahlengangaufteilung im Objektiv,
- Fig.7: einen im Strahlengang eines Theodolitfernrohrs integrierten erfindungsgemäßen Distanzmesser und
- Fig.8: eine Variante gemäß Fig. 7 mit anderen Strahlengängen.

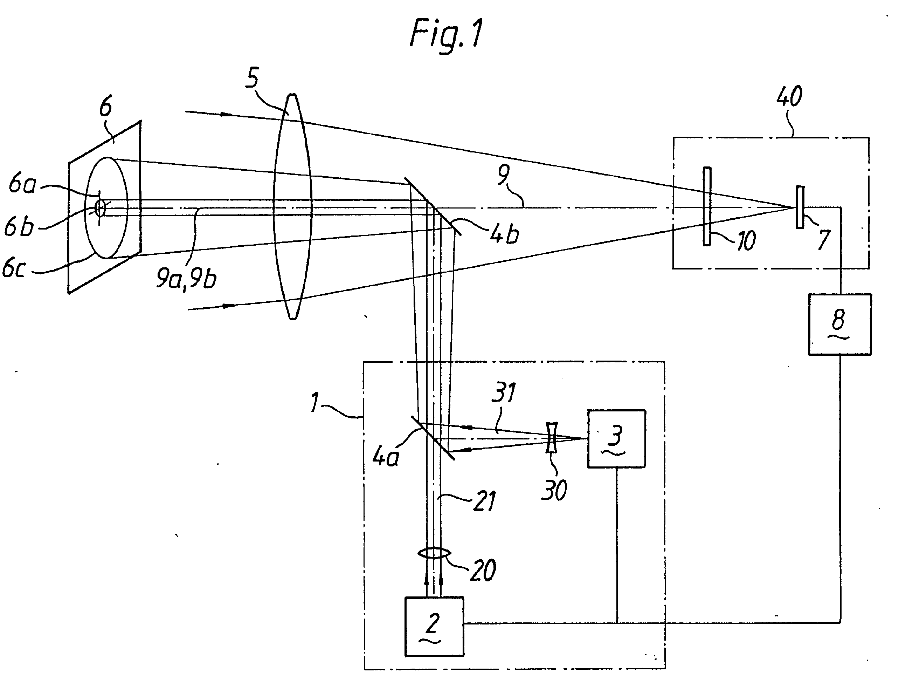

In Fig. 1 ist schematisch ein erfindungsgemäßes Distanzmeßgerät dargestellt. Es beinhaltet eine Sendereinheit 1 mit zwei Strahlungsquellen 2, 3. Die eine Strahlungsquelle 2 emittiert beugungsbegrenztes sichtbares Licht in einem Strahlungsbündel 21. Vorzugsweise wird als Strahlungsquelle 2 eine Laserdiode verwendet. Heutige käufliche Laserdioden emittieren eine beugungsbegrenzte Strahlung nur in einer Ebene, während in der dazu senkrechten Ebene eine größere Strahldivergenz vorhanden ist. Diese wird mit separaten optischen Elementen 20, z.B. mit Zylinderlinsen oder einem Apodisationsfilter kollimiert. In neueren Laserdioden können solche optischen Elemente 20 bereits integriert sein.

Die andere Strahlungsquelle 3 emittiert ein Strahlungsbündel 31 mit einer relativ großen Strahldivergenz. Die Strahldivergenz kann bereits bei der Emission der Strahlung entstehen oder sie kann durch optische Elemente 30 erzeugt werden. Die Wellenlänge der Strahlung liegt vorzugsweise im infraroten Wellenlängenbereich. Bei Verwendung von sichtbarem Licht wird in diesem Ausführungsbeispiel eine andere Wellenlänge als die des ersten Strahlungsbündels 21 genutzt. Als Strahlungsquelle 3 werden ebenfalls Laserdioden oder auch Leuchtdioden eingesetzt. Die Laserdioden besitzen gegenüber den Leuchtdioden vorteilhafterweise eine kleinere Sendefläche, eine höhere Leuchtkraft und sind kostengünstiger, jedoch benötigen sie eine aufwendigere Ansteuerelektronik.

Die Strahlungsbündel 21, 31 beider Strahlungsquellen 2, 3 werden mit Hilfe von optischen Einkoppelelementen 4a, 4b durch ein Objektiv 5 hindurchgeführt und auf ein Zielobjekt 6 gerichtet. Als optische Einkoppelelemente 4a, 4b können Strahlenteiler oder Teilerwürfel verwendet werden. Das Einkoppelelement 4a kann zudem auch ein mit optischen Schichten versehener Strahlenteiler sein, der die Strahlung der einen Strahlungsquelle 2 besonders gut hindurchläßt und gleichzeitig die Strahlung der anderen Strahlungsquelle 3 besonders gut reflektiert. Ebenso kann als Einkoppelelement 4a auch ein Spiegel mit einem Loch sein, der das divergente Strahlungsbündel 31 reflektiert, während das beugungsbegrenzte sichtbare Strahlungsbündel 21 durch das Loch hindurchgeführt wird. Das im Strahlengang nachfolgende Einkoppelelement 4b kann auch als Spiegel zur Reflexion beider Strahlungsbündel 21, 31 ausgebildet sein.

Die von den Strahlungsquellen 2, 3 emittierte Strahlung kann an verschiedenen Stellen durch das Objektiv 5 in Richtung Zielobjekt 6 hindurchgeführt werden. In Fig. 1 ist eine zur optischen Achse 9 des Objektivs 5 koaxiale Strahlungsführung dargestellt, bei der die Achsen 9a, 9b der Strahlungsbündel 21, 31 mit der optischen Achse 9 zusammenfallen.

Der Durchstoßpunkt der optischen Achse 9 am Zielobjekt 6 wird durch ein Kreuz 6a dargestellt. Der Meßfleck 6b des beugungsbegrenzten Strahlungsbündels 21 und der Meßfleck 6c des divergenten Strahlungsbündels 31 sind in diesem Ausführungsbeispiel konzentrisch zum Kreuz 6a.

Die vom Zielobjekt 6 reflektierte oder gestreute Strahlung wird vom Objektiv 5 aufgenommen. Das Objektiv 5 dient somit zugleich als Sende- und Empfangsobjektiv. Die empfangene Strahlung wird vom Objektiv 5 auf einem optoelektronischen Detektor 7 in einer Detektoreinheit 40 abgebildet. Die Detektorsignale werden an eine Steuer- und Auswerteeinheit 8 geführt, in der die Distanz zum Zielobjekt 6 nach dem Phasen- oder Laufzeitmeßprinzip ermittelt wird. Demgemäß wird die emittierte Strahlung durch geeignete Betriebsweise der Strahlungsquellen 2, 3 entsprechend intensitätsmoduliert oder gepulst.

Vor dem Detektor 7 ist im Empfangsstrahlengang ein Selektionsmittel 10 zur Selektion der vom Objektiv 5 empfangenen Strahlung der Strahlungsquellen 2, 3 vorgesehen. Das Selektionsmittel 10 kann eine manuell oder elektrisch bediente Vorrichtung wie zum Beispiel ein Filterrad oder ein Filterschieber sein, die einzelne optische Filter in den Strahlengang einbringen. Die einzelnen Filter lassen die Strahlung nur der einen Strahlungsquelle 2 oder nur der anderen Strahlungsquelle 3 hindurch. Solche Vorrichtungen sind an sich bekannt und werden daher nicht näher dargestellt. Damit empfängt der Detektor 7 selektiv und nacheinander die Strahlung der Strahlungsquellen 2, 3, wobei die Strahlung anderer Wellenlängen abgeblockt wird.

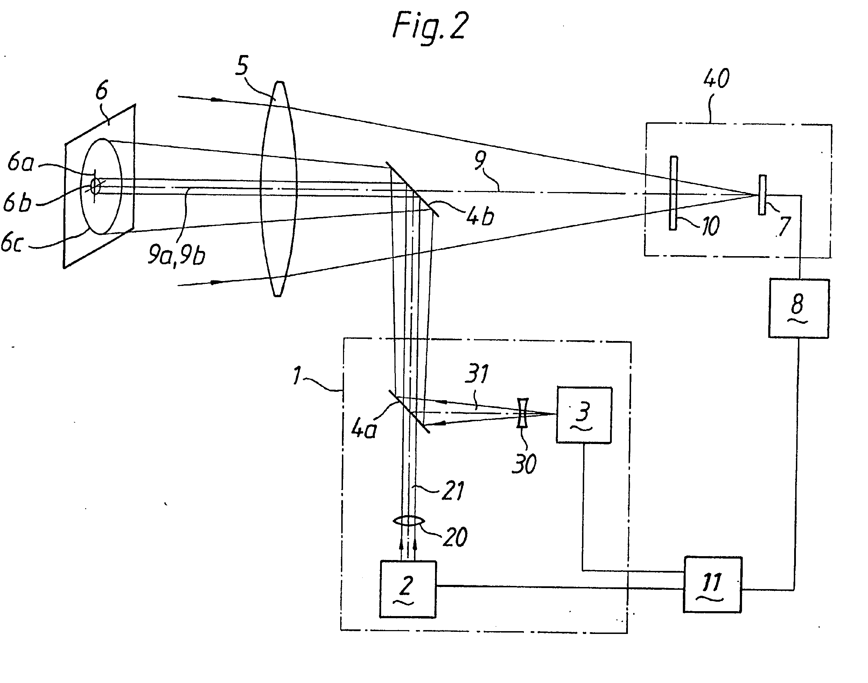

In Fig. 2 ist ein ganz anders aufgebautes Selektionsmittel 11 schematisch dargestellt. Das Selektionsmittel 11 steuert die Emission der Strahlungsquellen 2, 3 derart, daß nur die eine oder nur die andere Strahlungsquelle 2, 3 Strahlung emittiert. Somit gelangt auch nur das eine oder nur das andere Strahlungsbündel 21, 31 auf den Detektor 7, mit dem die Entfernungsmessung durchgeführt wird. Insofern können bei diesem Ausführungsbeispiel beide Strahlungsbündel 21, 31 sogar dieselbe Wellenlänge besitzen. Vorzugsweise wird aber für das divergente Strahlungsbündel infrarotes Licht verwendet. Zusätzlich ist es natürlich von Vorteil, in den Empfangsstrahlengang in der Detektoreinheit 40 Filter 10 einzusetzen, die im wesentlichen nur die Strahlung beider Strahlungsquellen 2, 3 transmittieren. Damit wird unerwünschtes Streulicht anderer Wellenlängen vom Detektor 7 ferngehalten und somit das Signal-/Rauschverhältnis verbessert. Das Filter 10 kann fest im Empfangsstrahlengang installiert werden, wenn es entsprechend auf die Wellenlängen der von den beiden Strahlungsquellen 2, 3 emittierten Strahlung abgestimmt ist.

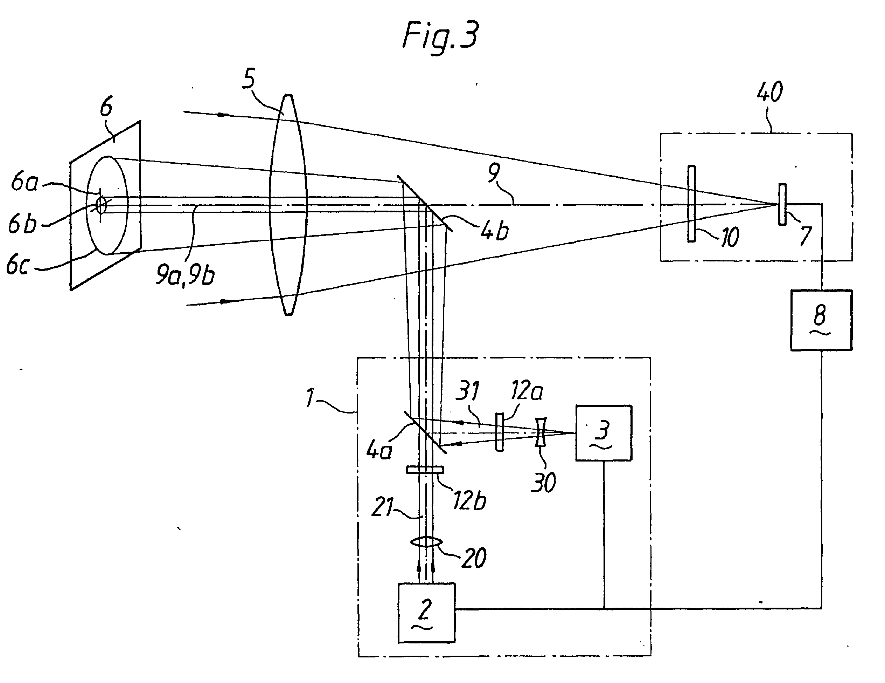

Gemäß Fig. 3 steuert das Selektionsmittel 12a, 12b die Transmission der Strahlung in den Strahlengängen nach den Strahlungsquellen 2, 3 derart, daß nur das eine oder nur das andere Strahlungsbündel 21, 31 durch das Objektiv 5 auf das Zielobjekt 6 geführt wird. Ein derartiges Selektionsmittel 12a, 12b kann elektrooptisch als Kerrzelle oder als Flüssigkristallzelle ausgeführt sein, die je nach angelegter Spannung lichtdurchlässig sind. Als alternative mechanische Ausführungsformen dienen manuell oder elektromechanisch betätigte Schieber, Klappen, schließbare Blenden oder ein Drehrad mit entsprechender Öffnung und Abdeckung. Auch in diesem Ausführungsbeispiel können beide Strahlungsbündel 21, 31 dieselbe Wellenlänge besitzen.

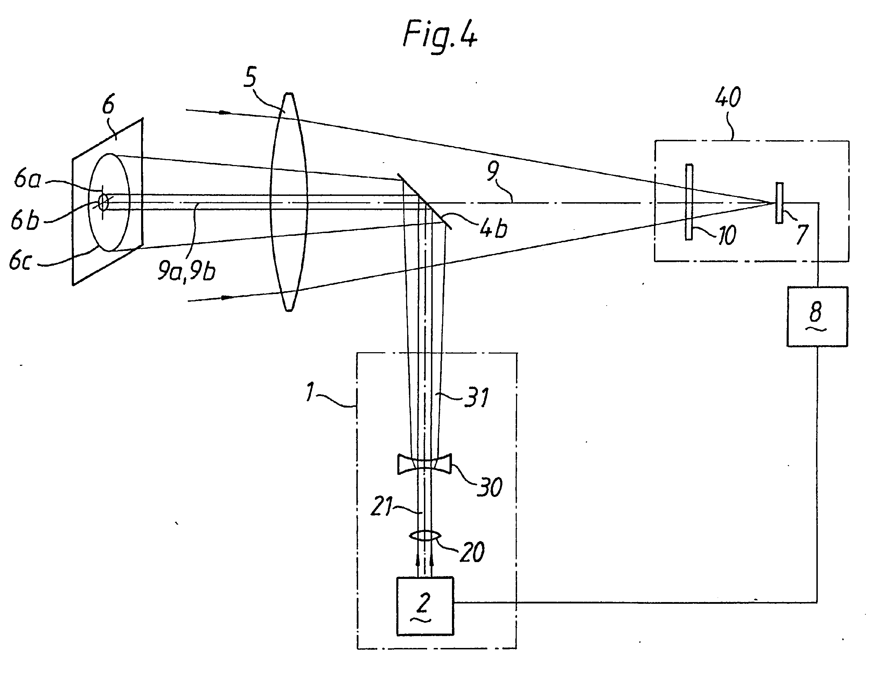

Im Ausführungsbeispiel gemäß Fig. 4 wird nur eine einzige Strahlungsquelle 2 eingesetzt, die in einer ersten Ausgestaltung ein beugungsbegrenztes, im sichtbaren Wellenlängenbereich liegendes Strahlungsbündel 21 erzeugt. Durch Einfügen eines optischen Elementes 30 mit strahlaufweitenden Eigenschaften in den Strahlengang entsteht alternativ ein divergentes Strahlungsbündel 31. Somit liefert die Sendereinheit 1 beide Arten von Strahlungsbündeln 21, 31 durch Entfernen des optischen Elements 30 aus dem Strahlengang oder durch dessen Einfügung in den Strahlengang. Die Wellenlänge der beiden Strahlungsbündel 21, 31 ist in diesem Fall dieselbe.

Die in Fig. 4 gezeigte Strahlungsquelle 2 kann aber auch ein 2-Wellenlängen-Laser sein, der beugungsbegrenztes Licht im infraroten Wellenlängenbereich emittiert. Das optische Element 30 erzeugt ein divergentes Strahlungsbündel 31. Durch Frequenzverdopplung bei ausreichender Strahlungsintensität erzeugt der zwei-Wellenlängen-Laser zusätzlich ein im sichtbaren Wellenlängenbereich liegendes beugungsbegrenztes Strahlungsbündel 21. Dieses Strahlungsbündel 21 wird ohne das strahlaufweitende optische Element 30 auf das Zielobjekt 6 gerichtet. In diesem Fall besitzen die beiden Strahlungsbündel 21, 31 unterschiedliche Wellenlängen.

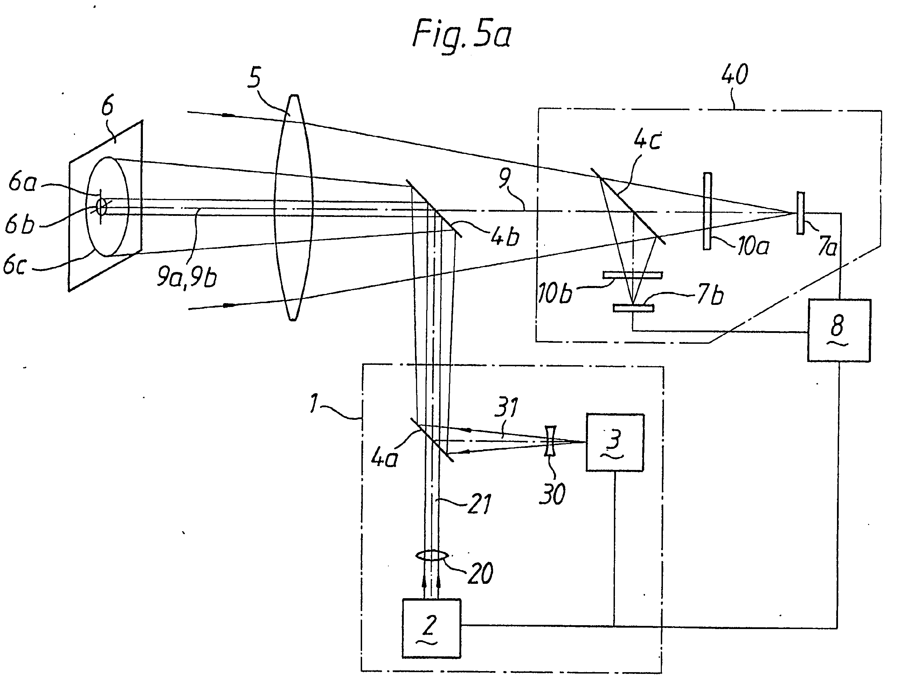

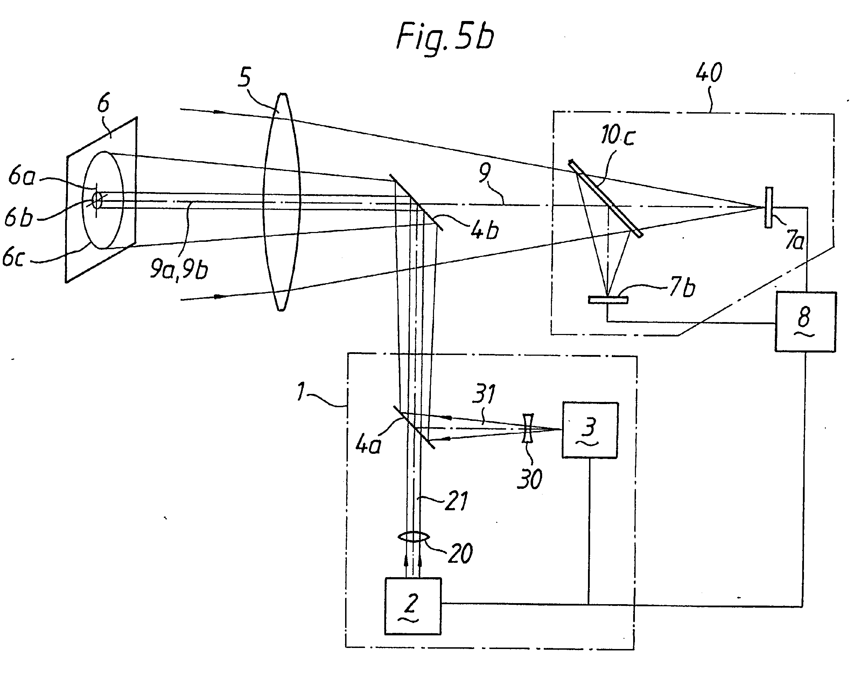

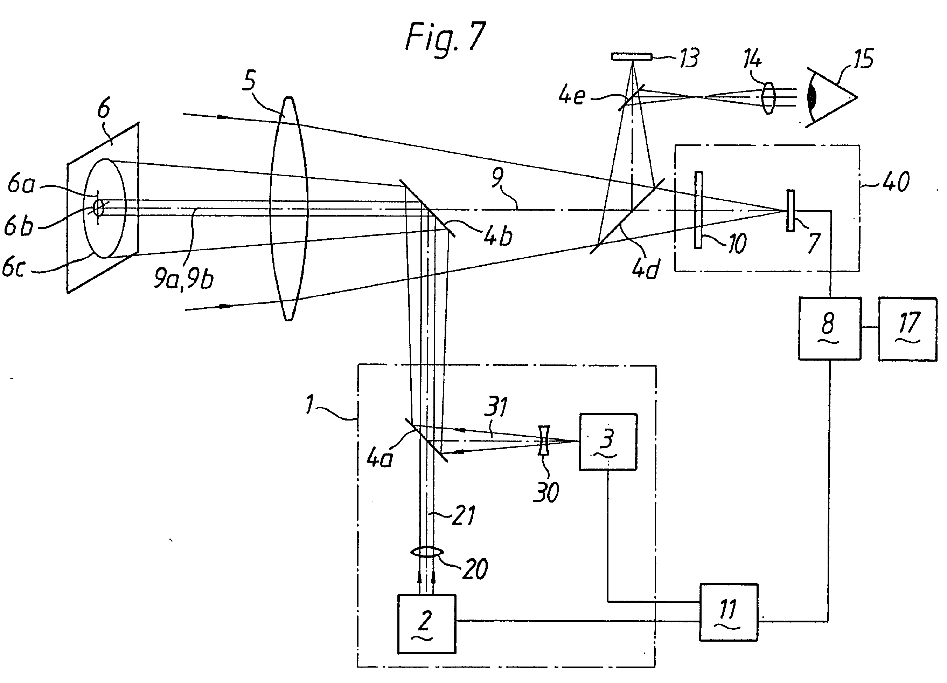

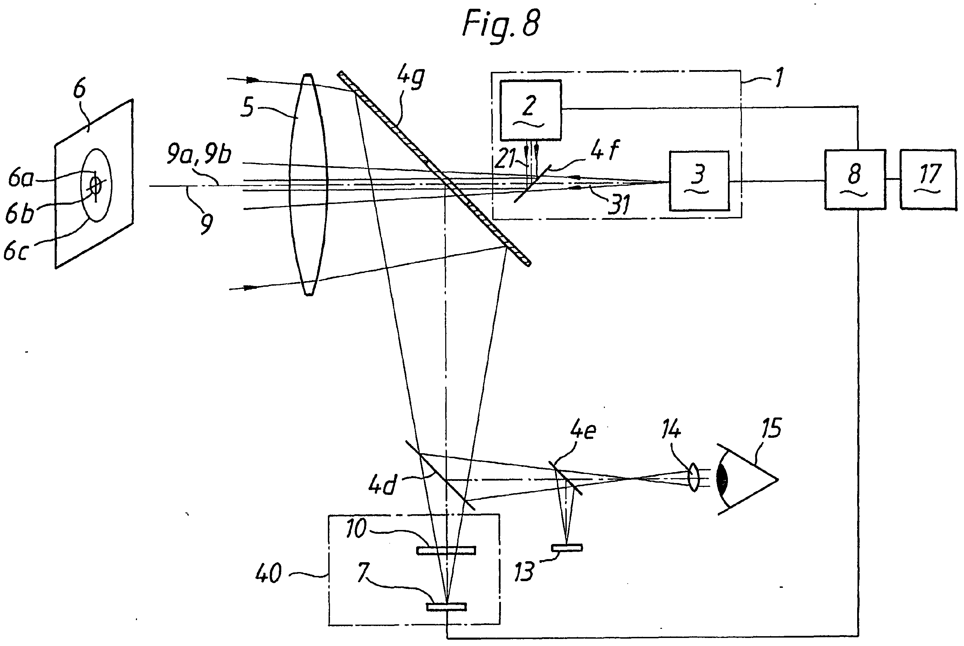

Wird das optische Element 30 in seinen optischen Eigenschaften, insbesondere dem wellenlängenabhängigen Brechungsindex, derart gestaltet, daß es kurzwelliges Licht kaum aufweitet und langweiliges Licht stark aufweitet - gegebenenfalls auch in Zusammenwirkung mit dem fokussierenden optischen Element 20 -, so kann das optische Element 30 im Strahlengang fest eingebaut werden. Aus der Sendereinheit 1 treten gleichzeitig ein beugungsbegrenztes sichtbares Strahlungsbündel 21 und ein divergentes infrarotes Strahlungsbündel 31 aus. In diesem Fall müssen zur Unterscheidung der Strahlungsbündel 21, 31 als Selektionsmittel wellenlängenabhängige optische Filter 10, 10a, 10b oder wellenlängenselektive Strahlenteiler 10c verwendet werden, wie sie in den vorhergehenden Figuren und in Fig. 5a, 5b gezeigt sind. Somit kann die Sendereinheit 1 mit nur einer Strahlungsquelle 2 auch in Kombination mit den Detektoreinheiten 40 gemäß Fig. 5a, 5b oder mit der Integration des Distanzmessers in einem Theodoliten gemäß Fig.7 und 8 eingesetzt werden.

Im übrigen können die Filter 10, 10a, 10b als Selektionsmittel auch generell im Strahlengang der Sendereinheit 1 eingesetzt werden in Ergänzung oder anstelle ihres Einsatzes im Empfangsstrahlengang in der Detektoreinheit 40.

Im Gegensatz zu der zeitlich nacheinander durchgeführten Detektion der Strahlungsbündel 21, 31 gemäß den Figuren 1-3 werden in den Ausführungsbeispielen gemäß Fig. 5a und Fig. 5b die Strahlungsbündel 21, 31 gleichzeitig detektiert. Das Zielobjekt 6 wird mit der Strahlung beider Strahlungsquellen 2, 3 gleichzeitig beleuchtet. Die vom Objektiv 5 empfangene Strahlung wird gemäß Fig. 5a durch einen Strahlenteiler 4c aufgeteilt. In den nachfolgenden Strahlengängen sind optische Filter 10a, 10b als Selektionsmittel angeordnet. Dadurch gelangt das eine Strahlungsbündel 21 auf den einen Detektor 7a und das andere Strahlungsbündel 31 auf den anderen Detektor 7b. Somit können beide Strahlungsbündel 21, 31 simultan gemessen und in der Steuer- und Auswerteeinheit 8 ausgewertet werden. Je nach Entfernungsbereich wird in der Auswerteeinheit 8 automatisch oder durch Voreinstellung oder manuell der entsprechende Meßwert zur Anzeige oder / und zur Weiterverarbeitung ausgewählt. Mit den fest eingebauten Selektionsmitteln 10a, 10b sind keine mechanisch beweglichen Bauteile weder im Sende- noch im Empfangsstrahlengang des Distanzmessers notwendig. Auch eine Umschaltung in der Sendereinheit 1 wird bei diesem Ausführungsbeispiel nicht benötigt.

Auch für die in Fig. 5b dargestellte Variante sind keine mechanischen oder elektronischen Umschaltvorrichtungen notwendig. Sie enthält als Selektionsmittel einen wellenlängenselektiven Strahlenteiler 10c. Dieser ist derart aufgebaut, daß er die Strahlung der einen Strahlungsquelle 2 transmittiert und die Strahlung der anderen Strahlungsquelle 3 reflektiert oder umgekehrt. Hierbei sind ebenso wie im Ausführungsbeispiel gemäß Fig. 5a Strahlungsbündel 21, 31 mit unterschiedlichen Wellenlängen notwendig. Die empfangene Strahlung aus beiden Strahlungsquellen 2, 3 wird simultan durch die Detektoren 7a, 7b erfaßt und gemessen.

In den bisherigen Ausführungsbeispielen gemäß Fig. 1 bis 5 sind die auf das Zielobjekt 6 gerichteten Strahlungsbündel 21, 31 koaxial zur optischen Achse 9 des Objektivs 5 angeordnet. Es ist von Vorteil, wenn diese Strahlenbündel eine deutlich geringere Querschnittsfläche als die des Objektives 5 besitzen, damit möglichst viel von dem vom Zielobjekt 6 reflektierten oder gestreuten Licht mit dem Objektiv 5 aufgenommen und auf den Detektor 7 beziehungsweise auf die Detektoren 7a, 7b fokussiert werden kann. Die koaxiale Anordnung der Strahlungsbündel 21, 31 hat zudem noch den Vorteil, daß die Achsen 9a, 9b der Strahlungsbündel 21, 31 und die optische Achse 9 des Objektivs 5 zu einer gemeinsamen Zielachse zusammenfallen. Somit sind die Strahlungsbündel 21, 31 exakt auf das Zielobjekt 6 ausgerichtet und können von vornherein den "richtigen" Weg für die Distanzbestimmung durchlaufen. Die Querschnittsflächen der Strahlungsbündel 21, 31 können rotationssymmetrisch oder asymmetrisch zu ihren Achsen 9a, 9b sein. Insbesondere kann der Schwerpunkt der Querschnittsfläche des einen sichtbaren Strahlungsbündels 21 exakt und die des anderen Strahlungsbündels 31 mit geringer Abweichung mit der optischen Achse 9 des Objektivs 5 in Überdeckung gebracht werden. Eine geringe Abweichung des Schwerpunktes der Querschnittsflächen ist für die Messung auf Retroreflektoren hinsichtlich des Signal-/Rauschverhältnis etwas günstiger.

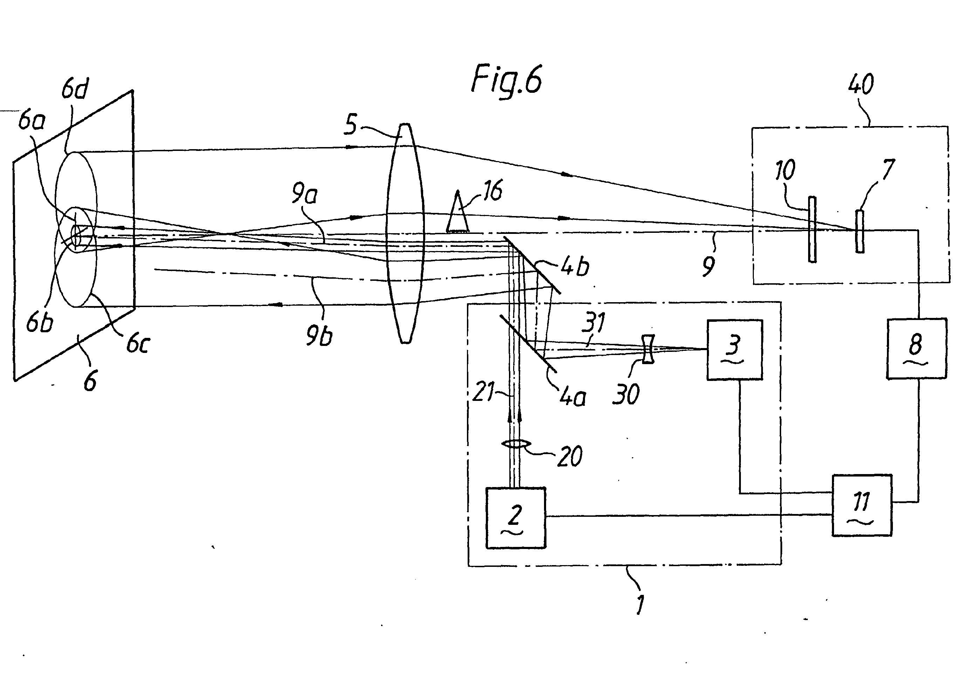

Die Achsen 9a, 9b der Strahlungsbündel 21, 31 können aber auch voneinander und von der optischen Achse 9 des Objektives 5 verschieden sein. Dies ist in Fig. 6 schematisch gezeigt. Die von den Strahlungsquellen 2, 3 emittierte Strahlung wird durch andere Pupillenbereiche des Objektives 5 hindurch auf das Zielobjekt 6 gerichtet. Auch die empfangene Strahlung wird gemäß Fig. 6 durch einen zur optischen Achse 9 seitlich versetzten Pupillenbereich des Objektives 5 hindurchgeführt. Die Sendereinheit 1 und die Detektoreinheit 40 sind dabei derart angeordnet, daß eine achsparallele Strahlführung ermöglicht wird. Für eine verbesserte Entfernungsmessung im Nahbereich ist ein abbildendes optisches Element 16 im Empfangsstrahlengang angeordnet. Selbstverständlich kann auch eine andere als die in Fig. 6 gezeigte Pupillenaufteilung des Objektivs 5 gewählt werden.

Ein Distanzmesser gemäß den obigen Ausführungsbeispielen kann mit einem Winkelmeßsystem kombiniert oder zusammen mit einem solchen integriert werden. Damit ist die Bestimmung der dreidimensionalen Koordinaten des Zielobjektes 6 mit der Polarmethode (zwei Winkelwerte, ein Distanzwert) möglich.

Der erfindungsgemäße Distanzmesser kann aber auch in einen Theodoliten als selbständiges Meßinstrument eingebaut werden. Die Winkelmessung mit dem Theodoliten bezieht sich auf die optische Achse des Theodolitfernrohrs, während die Distanzmessung entlang der optischen Achse 9 des Objektivs 5 des Distanzmessers erfolgt. Wegen der getrennten optischen Achsen entstehen gewisse Fehler in der Koordinatenbestimmung.

Deshalb ist es vorteilhaft, wenn die optische Achse des Theodoliten mit der des Distanzmessers zusammenfällt und sich alle Meßparameter nur auf eine gemeinsame Achse beziehen. In Fig. 7 ist eine solche Integration von Distanzmesser und Theodolit schematisch gezeigt. Das Objektiv 5 gehört gemeinsam sowohl dem Distanzmesser als auch dem Fernrohr des Theodoliten an. Durch einen Strahlenteiler 4d im Empfangsstrahlengang wird ein Teil des empfangenen Lichtes ausgekoppelt und über ein Okular 14 dem Betrachterauge 15 zugeführt. Der Betrachter kann somit das Zielobjekt 6 mit dem Theodolitfernrohr anvisieren. Die auf dieselbe optische Achse 9 bezogene Winkel- und Distanzmessung bestimmt die dreidimensionalen Koordinaten des Zielobjektes 6 mit höchster Genauigkeit. Über einen weiteren Strahlenteiler 4e können zudem auch Bilder des Zielobjektes 6 und dessen Umgebung durch eine Kamera 13 aufgenommen werden.

Fig. 8 zeigt gegenüber Fig. 7 eine Variante des in einem Theodoliten integrierten erfindungsgemäßen Distanzmessers mit anderen Verläufen der Strahlengänge. Ein Strahlenteiler 4f in der Sendereinheit 1 reflektiert das sichtbare Licht der einen Strahlungsquelle 2, während er für die Strahlung der anderen Strahlungsquelle 3 in Transmission arbeitet. Danach gelangt die Strahlung der Strahlungsquellen 2, 3 durch eine Öffnung in einem Spiegel 4g zum Objektiv 5 und zum Zielobjekt 6. Die dort reflektierte oder gestreute und anschließend vom Objektiv 5 empfangene Strahlung wird über den Spiegel 4g auf den Detektor 7 und das Fernrohrokular 14 gelenkt. Der in Fig. 8 gezeigte Spiegel 4g ist als ebener Spiegel ausgebildet. In abgewandelter Form kann dieser auch eine gekrümmte Spiegelfläche zum Fokussieren der empfangenen Strahlung aufweisen. In diesem Fall kann die Brechkraft des Objektives 5 entsprechend niedriger gewählt oder das Objektiv 5 sogar durch den derart gekrümmten Spiegel ersetzt werden. Selbstverständlich kann in diesem Ausführungsbeispiel das Okular 14 auch durch eine Kamera 13 ersetzt oder diese zusätzlich gemäß Fig. 8 eingefügt werden.

## Patentansprüche

1. Vorrichtung zur optischen Messung der Distanz zu verschiedenartigen Zielobjekten (6) - einerseits zu einem nicht-kooperativen Zielobjekt (6) mit einer Strahlungsbündel streuenden, natürlich rauhen Oberfläche und andererseits zu einem kooperativen Zielobjekt (6) mit einer Strahlungsbündel reflektierenden Zielmarke - in der geodätischen und industriellen Vermessung mit
- einer Sendereinheit (1) zur Emission von optischen Strahlungsbündeln zu einem Zielobjekt (6),
- einem gemeinsamen Objektiv (5) zum Empfang der reflektierten oder gestreuten Strahlungsbündel und zur Abbildung derselben auf einem optoelektronischen Detektor (7) in einer Detektoreinheit (40) und
- einer Steuer- und Auswerteeinheit (8) zur Ermittlung der Distanz zum Zielobjekt (6),
**dadurch gekennzeichnet, daß**
- die Sendereinheit (1) eine oder zwei optische Strahlungsquellen (2, 3) zur Erzeugung zweier trennbarer Strahlungsbündel (21, 31) aufweist, wobei das dem nicht-kooperativen Zielobjekt zugeordnete erste Strahlungsbündel (21) eine beugungsbegrenzte erste Strahldivergenz aufweist und im sichtbaren Wellenlängenbereich liegt und das dem kooperativen Zielobjekt zugeordnete zweite Strahlungsbündel (31) eine im Vergleich zum ersten Strahlungsbündel (21) relativ grosse zweite Strahldivergenz aufweist und im sichtbaren oder infraroten Wellenlängenbereich liegt, wobei
- optische Einkoppelelemente (4a, 4b) derart vorgesehen sind, daß die beiden Strahlungsbündel (21, 31) aus der Sendereinheit (1) durch das gemeinsame Objektiv (5) in Richtung Zielobjekt (6) hindurchtreten, und dass
- Selektionsmittel (10; 11; 12a,1 2b) zur Anpassung der Messung an die verschiedenartigen Zielobjekte (6) und zur Unterscheidung der Strahlungsbündel vorgesehen sind, die in der Sendereinheit (1) die gleichzeitige oder alternative Emission der beiden Strahlungsbündel (21, 31) steuern und die in der Detektoreinheit (40) die getrennte Detektion der empfangenen Strahlungsbündel steuern, wobei
- nur das gestreute erste Strahlungsbündel (21) oder nur das reflektierte zweite Strahlungsbündel (31) auf den Detektor (7) gelangt, vom Detektor (7) selektiv empfangen und in der Steuer- und Auswerteeinheit (8) ausgewertet wird (Fig. 1 und 4; Fig. 2; Fig.3).

2. Vorrichtung zur optischen Messung der Distanz zu verschiedenartigen Zielobjekten (6) - einerseits zu einem nicht-kooperativen Zielobjekt (6) mit einer Strahlungsbündel streuenden, natürlich rauhen Oberfläche und andererseits zu einem kooperativen Zielobjekt (6) mit einer Strahlungsbündel reflektierenden Zielmarke - in der geodätischen und industriellen Vermessung mit
- einer Sendereinheit (1) zur Emission von optischen Strahlungsbündeln zu einem Zielobjekt (6),
- einem gemeinsamen Objektiv (5) zum Empfang der reflektierten oder gestreuten Strahlungsbündeln und zur Abbildung derselben auf zwei optoelektronischen Detektoren (7a, 7b) in einer Detektoreinheit (40) und
- einer Steuer- und Auswerteeinheit (8) zur Ermittlung der Distanz zum Zielobjekt (6),
**dadurch gekennzeichnet, daß**
- die Sendereinheit (1) eine oder zwei optische Strahlungsquellen (2, 3) zur Erzeugung zweier trennbarer Strahlungsbündel (21, 31) aufweist, wobei das dem nicht-kooperativen Zielobjekt zugeordnete erste Strahlungsbündel (21) eine beugungsbegrenzte Strahldivergenz aufweist und im sichtbaren Wellenlängenbereich liegt und das dem kooperativen Zielobjekt zugeordnete zweite Strahlungsbündel (31) eine im Vergleich zum ersten Strahlungsbündel (21) relativ grosse Divergenz aufweist und im sichtbaren oder infraroten Wellenlängenbereich liegt, wobei
- optische Einkoppelelemente (4a, 4b) derart vorgesehen sind, daß die beiden Strahlungsbündel (21, 31) aus der Sendereinheit (1) durch das gemeinsame Objektiv (5) in Richtung Zielobjekt (6) hindurchtreten, und dass
- Selektionsmittel (10a, 10b; 10c) zur Anpassung der Messung an die verschiedenartigen Zielobjekte (6) und zur Unterscheidung der Strahlungsbündel vorgesehen sind, die in der Sendereinheit (1) die gleichzeitige oder alternative Emission der beiden Strahlungsbündel (21, 31) steuern und die in der Detektoreinheit (40) die getrennte Detektion der empfangenen Strahlungsbündel steuern, wobei
- nur das gestreute erste Strahlungsbündel (21) auf den ersten Detektor (7a) und nur das reflektierte zweite Strahtungsbündel (31) auf den zweiten Detektor (7b) gelangen und vom jeweiligen Detektor (7a, 7b) selektiv empfangen und jeweils in der Steuer- und Auswerteeinheit (8), gegebenenfalls simultan, ausgewertet werden ( Fig.5a : Fig.5b).

3. Vorrichtung nach Anspruch 1 oder 2, **dadurch gekennzeichnet, daß**
- das erste Strahlungsbündel (21) und das zweite Strahlungsbündel (31) unterschiedliche Wellenlängen aufweisen,
- als Selektionsmittel ein oder mehrere optische Filter (10,10a,10b) oder wellenlängenselektive Strahlenteiler (10c) im Strahlengang der vom Objektiv (5) empfangenen Strahlungsbündel vorgesehen sind.

4. Vorrichtung nach Anspruch 1 oder 2, **dadurch gekennzeichnet, daß** als Selektionsmittel eine elektronische Umschaltvorrichtung (11) zur Steuerung der Emission der Strahlungsquellen (2, 3) vorgesehen ist, mit der nur das erste oder nur das zweite Strahlungsbündel (21, 31) erzeugt wird.

5. Vorrichtung nach Anspruch 1 oder 2, **dadurch gekennzeichnet, daß** als Selektionsmittel eine elektrooptische oder mechanische Umschaltvorrichtung (12a, 12b) zur Steuerung der Transmission der beiden Strahlungsbündel (21, 31) in den Strahlengängen nach den Strahlungsquellen (2, 3) vorgesehen ist, mit der nur das erste oder nur das zweite Strahlungsbündel (21, 31) zum Objektiv (5) weitergeführt wird (Fig. 3).

6. Vorrichtung nach einem der vorhergehenden Ansprüche, **dadurch gekennzeichnet, daß** optische Elemente (30) zur Erzeugung des zweiten Strahlungsbündels (31) vorgesehen sind.

7. Vorrichtung nach einem der vorhergehenden Ansprüche, **dadurch gekennzeichnet, daß** die Querschnittsfläche der beiden Strahlungsbündel (21, 31) beim Durchgang durch das Objektiv (5) deutlich kleiner ist als die des Objektives (5).

8. Vorrichtung nach einem der vorhergehenden Ansprüche, **dadurch gekennzeichnet, daß** die beiden Strahlungsbündel (21, 31) koaxial zur optischen Achse (9) des Objektives (5) verlaufen.

9. Vorrichtung nach Anspruch 1 bis 6, **dadurch gekennzeichnet, daß** ein zur optischen Achse (9) seitlich verschobener Pupillenbereich des Objektives (5) zur Hindurchführung der emittierten und / oder empfangenen Strahlung vorgesehen ist, wobei die Sendereinheit (1) und die Detektoreinheit (40) entsprechend einer achsparallelen Strahlführung angeordnet sind (Fig. 6).

10. Vorrichtung nach einem der vorhergehenden Ansprüche, **dadurch gekennzeichnet, daß** als Strahlungsquelle (2) ein Laser oder ein zwei-Wellenlängen-Laser vorgesehen ist.

11. Vorrichtung nach einem der vorhergehenden Ansprüche, **dadurch gekennzeichnet, daß** als zweite Strahlungsquelle (3) ein Laser oder eine Leuchtdiode vorgesehen ist, die infrarotes Licht emittieren.

12. Vorrichtung nach einem der vorhergehenden Ansprüche, **dadurch gekennzeichnet, daß** die emittierte Strahlung intensitätsmoduiiert oder gepulst ist und die Distanzmessung nach dem Phasenmeßprinzip oder dem Laufzeitmeßprinzip erfolgt.

13. Vorrichtung nach einem der vorhergehenden Ansprüche, **dadurch gekennzeichnet, daß** die optischen Einkoppelelemente (4a, 4b) Strahlenteiler, Teilerwürfel, Spiegel oder mit einem Loch versehene Spiegel sind.

14. Vorrichtung nach einem der vorhergehenden Ansprüche, **dadurch gekennzeichnet, daß** die optische Achse (9) des Objektives (5) zusätzlich die Zielachse eines integrierten Winkelmeßsystems (16) ist (Fig.6).

15. Vorrichtung nach einem der vorhergehenden Ansprüche, **dadurch gekennzeichnet, daß** ein Strahlenteiler (4d) im Empfangsstrahlengang vorgesehen ist, durch den ein Teil der empfangenen Strahlung auf eine elektronische Kamera (13) abgezweigt wird (Fig. 7, Fig. 8).

16. Vorrichtung nach einem der vorhergehenden Ansprüche, **dadurch gekennzeichnet, daß** das Objektiv (5) zusammen mit einem Okular (14) zugleich ein Fernrohr bildet (Fig.7, Fig.8).

17. Vorrichtung nach einem der vorhergehenden Ansprüche, **dadurch gekennzeichnet, daß** sie in einem Theodolit-Meßsystem mit einem gemeinsamen Objektiv (5) zur Winkel- und Distanzmessung integriert ist.

## Claims

1. Device for optical measurement of the distance to various target objects (6) - firstly to a non-cooperative target object (6) having a naturally rough surface which scatters a bundle of radiation and secondly to a cooperative target object (6) having a target plate reflecting a bundle of radiation - in geodetic and industrial surveying, comprising
- a transmitter unit (1) for emitting bundles of optical radiation to a target object (6),
- a common objective (5) for receiving the reflected or scattered bundle of radiation and for projection thereof onto an optoelectronic detector (7) in a detector unit (40) and
- a control and evaluation unit (8) for determining the distance to the target object (6),
**characterized in that**
- the transmitter unit (1) has one or two optical radiation sources (2, 3) for producing two separable bundles of radiation (21, 31), the first bundle of radiation (21) coordinated with the non-cooperative target object having a diffraction-limited first beam divergence and being in the visible wavelength range, and the second bundle of radiation (31) coordinated with the cooperative target object having a second beam divergence which is relatively large - in comparison with the first bundle of radiation (21) - and being in the visible or infrared wavelength range,
- optical incoupling elements (4a, 4b) being provided in such a way that the two bundles of radiation (21, 31) from the transmitter unit (1) pass through the common objective (5) in the direction of a target object (6), and **in that**
- selection means (10; 11; 12a, 12b) for adapting the measurement to the various target objects (6) and for distinguishing between the bundles of radiation are provided, which selection means, in the transmitter unit (1) control the simultaneous or alternative emission of the two bundles of radiation (21, 31) and which selection means, in the detector unit (40), control the separate detection of the received bundles of radiation,
- only the scattered first bundle of radiation (21) or only the reflected second bundle of radiation (31) reaching the detector (7), being selectively received by the detector (7) and being evaluated in the control and evaluation unit (8) (fig. 1 and 4; fig. 2; fig. 3).

2. Device for optical measurement of the distance to various target objects (6) - firstly to a non-cooperative target object (6) having a naturally rough surface which scatters a bundle of radiation and secondly to a cooperative target object (6) having a target plate reflecting a bundle of radiation - in geodetic and industrial surveying, comprising
- a transmitter unit (1) for emitting bundles of optical radiation to a target object (6),
- a common objective (5) for receiving the reflected or scattered bundle of radiation and for projection thereof onto two optoelectronic detectors (7a, 7b) in a detector unit (40) and
- a control and evaluation unit (8) for determining the distance to the target object (6),
**characterized in that**
- the transmitter unit (1) has one or two optical radiation sources (2, 3) for producing two separable bundles of radiation (21, 31), the first bundle of radiation (21) coordinated with the non-cooperative target object having a diffraction-limited beam divergence and being in the visible wavelength range and the second bundle of radiation (31) coordinated with the cooperative target object having a divergence which is relatively large - in comparison with the first bundle of radiation (21) - and being in the visible or infrared wavelength range,
- optical incoupling elements (4a, 4b) being provided in such a way that the two bundles of radiation (21, 31) from the transmitter unit (1) pass through the common objective (5) in the direction of the target object (6), and **in that** - selection means (10a, 10b; 10c) for adapting the measurement to the various target objects (6) and for distinguishing between the bundles of radiation are provided, which selection means, in the transmitter unit (1), control the simultaneous or alternative emission of the two bundles of radiation (21, 31) and which selection means, in the detector unit (40), control the separate detection of the received bundles of radiation,
- only the scattered first bundle of radiation (21) reaching the first detector (7a) and only the reflected second bundle of radiation (31) reaching the second detector (7b) and being selectively received by the respective detector (7a, 7b) and in each case being evaluated in the control and evaluation unit (8), optionally simultaneously (fig. 5a; fig. 5b).

3. Device according to Claim 1 or 2, **characterized in that**
- the first bundle of radiation (21) and the second bundle of radiation (31) have different wavelengths,
- one or more optical filters (10, 10a, 10b) or wavelength-selective beam splitters (10c) are provided as selection means in the beam path of the bundle of radiation received by the objective (5).

4. Device according to Claim 1 or 2, **characterized in that** an electronic switching device (11) for controlling the emission of the radiation sources (2, 3) is provided as selection means, by means of which switching device only the first or only the second bundle of radiation (21, 31) is produced.

5. Device according to Claim 1 or 2, **characterized in that** an electrooptical or mechanical switching device (12a, 12b) for controlling the transmission of the two bundles of radiation (21, 31) is provided as selection means in the beam paths after the radiation sources (2, 3), by means of which switching device only the first or only the second bundle of radiation (21, 31) is passed on to the objective (5). (fig. 3).

6. Device according to any of the preceding Claims, **characterized in that** optical elements (30) for producing the second bundle of radiation (31) are provided.

7. Device according to any of the preceding Claims, **characterized in that** the cross-sectional area of the two bundles of radiation (21, 31) on passage through the objective (5) is substantially smaller than that of the objective (5).

8. Device according to any of the preceding Claims, **characterized in that** the two bundles of radiation (21, 31) are coaxial with the optical axis (9) of the objective (5) .

9. Device according to any of Claims 1 to 6,
**characterized in that** a pupil region of the objective (5), which region is laterally displaced relative to the optical axis (9), is provided for passage of the emitted and/or received radiation, the transmitter unit (1) and the detector unit (40) being arranged for beam guidance parallel to the axis (fig. 6).

10. Device according to any of the preceding Claims, **characterized in that** a laser or a two-wavelength laser is provided as radiation source (2).

11. Device according to any of the preceding Claims, **characterized in that** a laser or a light emitting diode is provided as second radiation source (3), which laser and which light emitting diode emit infrared light.

12. Device according to any of the preceding Claims, **characterized in that** the emitted radiation is intensity-modulated or pulsed and the distance measurement is effected according to the phase measurement principle or the transit time measurement principle.

13. Device according to any of the preceding Claims, **characterized in that** the optical incoupling elements (4a, 4b) are beam splitters, splitter cubes, mirrors, or mirrors provided with a hole.

14. Device according to any of the preceding Claims, **characterized in that** the optical axis (9) of the objective (5) is additionally the sighting axis of an integrated angle measuring system (16) (fig. 6).

15. Device according to any of the preceding Claims, **characterized in that** a beam splitter (4d) is provided in the received beam path, by means of which beam splitter a part of the received radiation is branched off to an electronic camera (13) (fig. 7, fig. 8) .

16. Device according to any of the preceding Claims, **characterized in that** the objective (5) together with an eyepiece (14) forms a telescope (fig. 7, fig. 8).

17. Device according to any of the preceding Claims, **characterized in that** it is integrated in a theodolite measuring system having a common objective (5) for angle and distance measurement.

## Revendications

1. Dispositif pour la mesure optique de la distance envers des objets cibles (6) de différents types - d'une part, envers un objet cible (6) non coopératif ayant une surface rugueuse naturellement, dispersant un faisceau de rayonnement et, d'autre part, envers un objet cible (6) coopératif ayant un repère de visée réfléchissant des faisceaux de rayonnement - dans le relevé géodésique et industriel, comprenant
- une unité émettrice (1), pour l'émission de faisceaux de rayonnement optique vers un objet cible (6),
- un objectif (5) commun, pour la réception des faisceaux de rayonnement réflectifs ou diffusés et pour l'imagerie de ceux-ci sur un détecteur (7) optoélectronique dans une unité de détecteur (40), et
- une unité de commande et d'évaluation (8), pour la détermination de la distance envers l'objet cible (6),
**caractérisé en ce que**
- l'unité émettrice (1) présente une ou deux sources de rayonnement optique (2, 3) pour produire deux faisceaux de rayonnement (21, 31) séparables, le premier faisceau de rayonnement (31), associé à l'objet cible non coopératif, présentant une première divergence de rayonnement limitée par diffraction et étant situé dans la plage de longueurs d'ondes visible, et le deuxième faisceau de rayonnement (31), associé à l'objet cible coopératif, présentant une deuxième divergence de rayonnement, relativement grande par rapport au premier faisceau de rayonnement (21), et étant situé dans la plage de longueurs d'ondes visible ou infrarouge, où
- des éléments de couplage optique (4a, 4b) sont prévus de manière que les deux faisceaux de rayonnement (21, 31) issus de l'unité émettrice (1) passent par l'objectif (5) commun dans la direction de l'objet cible (6), et **en ce que**
- des moyens de sélection (10 ; 11 ; 12a, 12b) sont prévus pour l'adaptation de la mesure aux objets cibles (6) de différents types et pour distinguer les faisceaux de rayonnement, les moyens de sélection commandant dans l'unité émettrice (1) l'émission simultanée ou alternée des deux faisceaux de rayonnement (21, 31), et commandant dans l'unité détectrice (40) la détection séparée des faisceaux de rayonnement reçus, où
- seul le premier faisceau de rayonnement (21) diffusé, ou seul le deuxième faisceau de rayonnement (31) réfléchi, arrive sur le détecteur (7), est reçu de façon sélective par le détecteur (7) et évalué dans l'unité de commande et d'évaluation (8) (Figs. 1 et 4 ; Fig. 2 ; Fig. 3).

2. Dispositif de mesure optique de la distance envers des objets cibles (6) de différents types - d'une part, envers un objet cible (6) non coopératif, ayant une surface naturellement rugueuse, dispersant un faisceau de rayonnement et, d'autre part, envers un objet cible (6) coopératif, ayant un repère de visée réfléchissant des faisceaux de rayonnement - dans le relevé géodésique industriel, comprenant
- une unité émettrice (1), pour l'émission de faisceaux de rayonnement optiques vers un objet cible (6),
- un objectif (5) commun, pour la réception des faisceaux de rayonnement réfléchis ou diffusés, et pour l'imagerie de ceux-ci sur deux détecteurs (7a, 7b) optoélectroniques dans une unité de détecteur (40), et
- une unité de commande et d'évaluation (8), pour la détermination de la distance envers l'objet cible (6),
**caractérisé en ce que**
- l'unité émettrice (1) présente une ou deux sources de rayonnement optique (2, 3), pour produire deux faisceaux de rayonnement (21, 31) séparables, où le premier faisceau de rayonnement (21), associé à l'objet cible non coopératif, présente une divergence de rayonnement limitée par la diffraction et est situé dans la plage de longueurs d'ondes visible, et le deuxième faisceau de rayonnement (31), associé à l'objet cible coopératif, présente une divergence relativement grande - par rapport au premier faisceau de rayonnement (21) - et est situé dans la plage de longueurs d'ondes visible ou infrarouge, où
- des éléments de couplage optique (4a, 4b) sont prévus, de manière que les deux faisceaux de rayonnement (21, 31) issus de l'unité émettrice (1) passent par l'objectif (5) commun dans la direction de l'objet cible (6), et **en ce que**
- des moyens de sélection (10a ; 10b ; 10c) sont prévus pour l'adaptation de la mesure à des objets cibles (6) de types différents et pour la distinction des faisceaux de rayonnement, les moyens de sélection commandant dans l'unité émettrice (1) l'émission simultanée ou alternée des deux faisceaux de rayonnement (21, 31), et commandant, dans l'unité détectrice (40), la détection séparée des faisceaux de rayonnement reçus, où
- seul le premier faisceau de rayonnement (21) diffusé arrive sur le premier détecteur (7a) et seul le deuxième faisceau de rayonnement (31) réfléchi arrive sur le deuxième détecteur (7b) et sont reçus de façon sélective par le détecteur (7a, 7b) respectif et sont chacun évalués le cas échéant simultanément dans l'unité de commande et d'évaluation (8) (Fig. 5a ; Fig. 5b).

3. Dispositif selon la revendication 1 ou 2, **caractérisé en ce que**
- le premier faisceau de rayonnement (21) et le deuxième faisceau de rayonnement (31) présentent des longueurs d'ondes différentes,
- un ou plusieurs filtres optiques (10, 10a, 10b) ou diviseurs de rayons (10c), sélectifs à la longueur d'ondes, sont prévus en tant que moyens de sélection dans le trajet des rayons des faisceaux de rayonnement reçus par l'objectif (5).

4. Dispositif selon la revendication 1 ou 2, **caractérisé en ce qu'**est prévu comme moyen de sélection un dispositif de commutation électronique (11) pour la commande de l'émission des sources de rayonnement (2, 3), dispositif avec lequel le deuxième faisceau de rayonnement, ou seulement le deuxième faisceau de rayonnement (21, 31), est produit.

5. Dispositif selon la revendication 1 ou 2, **caractérisé en ce qu'**est prévu en tant que moyen de sélection un dispositif de commutation (12a, 12b) électro-optique ou mécanique, pour la commande de la transmission des deux faisceaux de rayonnement (21, 31) dans les trajets de rayon après les sources de rayonnement (2, 3), dispositif avec lequel ne continue à être guidé que seulement le premier ou seulement le deuxième faisceau de rayonnement (21, 31) vers l'objectif (5) (Fig. 3).

6. Dispositif selon l'une des revendications précédentes, **caractérisé en ce que** des éléments optiques (30) sont prévus pour produire le deuxième faisceau de rayonnement (31).

7. Dispositif selon l'une des revendications précédentes, **caractérisé en ce que** la surface de section transversale des deux faisceaux de rayonnement (21, 31) lors du passage par l'objectif (5) est nettement plus petite que celle de l'objective (5) .

8. Dispositif selon l'une des revendications précédentes; **caractérisé en ce que** les deux faisceaux de rayonnement (21, 31) s'étendent coaxialement à l'axe optique (9) de l'objective (5).

9. Dispositif selon les revendications 1 à 6, **caractérisé en ce qu'**une zone de pupille, décalée latéralement par rapport à l'axe optique (9), de l'objectif (5) est prévue pour permettre le guidage du rayonnement émis et/ou reçu, sachant que l'unité de commande (1) et l'unité détectrice (40) sont disposées de manière correspondante à un guidage de rayon parallèle à l'axe (Fig. 6).

10. Dispositif selon l'une des revendications précédentes, **caractérisé en ce qu'**est prévue comme source de rayonnement (2) un laser ou un laser à deux longueurs d'ondes.

11. Dispositif selon l'une des revendications précédentes, **caractérisé en ce qu'**est prévue comme deuxième source de rayonnement (3) un laser ou une diode lumineuse, qui émet de la lumière infrarouge.

12. Dispositif selon l'une des revendications précédentes, **caractérisé en ce que** le rayonnement émis est modulé en intensité ou pulsé, et la mesure de distance est effectuée d'après le principe de mesure de phase, ou d'après le principe de mesure du temps de parcours.

13. Dispositif selon l'une des revendications précédentes, **caractérisé en ce que** les éléments de couplage optique (4a, 4b) sont des diviseurs de rayon, des cubes diviseurs, des miroirs ou des miroirs munis d'un trou.

14. Dispositif selon l'une des revendications précédentes, **caractérisé en ce que** l'axe optique (9) de l'objectif (5) est en plus l'axe de visée d'un système de mesure d'angle (16) intégré (Fig. 6).

15. Dispositif selon l'une des revendications précédentes, **caractérisé en ce que**, dans le chemin des rayons de réception, est prévu un diviseur de rayon (4d), au moyen duquel une partie du rayonnement reçu est déviée sur une caméra électronique (13) (Fig. 7, Fig. 8).

16. Dispositif selon l'une des revendications précédentes, **caractérisé en ce que** l'objectif (5) forme, conjointement avec un oculaire (14), en même temps une lunette de visée (Fig. 7, Fig. 8).

17. Dispositif selon l'une des revendications précédentes, **caractérisé en ce qu'**il est intégré dans un système de mesure à théodolite avec un objectif (5) commun, pour la mesure des angles et des distances.
